Europäisches Patentamt

European Patent Office

Office européen des brevets

(19)

(11) **EP 0 896 991 B1**

(12) **EUROPÄISCHE PATENTSCHRIFT**

(45) Veröffentlichungstag und Bekanntmachung des Hinweises auf die Patenterteilung:
**02.04.2003  Patentblatt 2003/14**

(51) Int Cl.7: **C09D 151/08**, C08F 283/02

(21) Anmeldenummer: **98114777.0**

(22) Anmeldetag: **06.08.1998**

(54) **Neue Acrylatpolymerisate, deren Grundlage Polyesterharze oder Polyester-Oligomere sind, deren Herstellung und Verwendung in Beschichtungsmitteln**

Acrylate polymers based on polyesters or polyester oligomers their preparation and use in coatings

Polymères d'acrylates à base de polyesters ou d' oligomères de polyesters, leur préparation et leur utilisation dans des peintures

(84) Benannte Vertragsstaaten:
**AT BE DE ES FR GB IT NL**

(30) Priorität: **07.08.1997  AT  132697**

(43) Veröffentlichungstag der Anmeldung:
**17.02.1999  Patentblatt 1999/07**

(73) Patentinhaber: **Solutia Austria GmbH 8402 Werndorf (AT)**

(72) Erfinder:
• **Epple, Ulrich, Dr.**
  **8042 Graz (AT)**
• **Kuttler, Ulrike, Dr.**
  **8041 Graz (AT)**
• **Dworak, Gert, Dr.**
  **8010 Graz (AT)**
• **Pietsch, Claudia**
  **8010 Graz (AT)**

(74) Vertreter: **Zounek, Nikolai, Dipl.-Ing. et al Patentanwaltskanzlei Zounek, Industriepark Kalle Albert, Gebäude H391 Rheingaustrasse 190-196 65174 Wiesbaden (DE)**

(56) Entgegenhaltungen:
  EP-A- 0 626 432         DE-A- 4 229 196
  US-A- 5 326 820         US-A- 5 460 892

**Beschreibung**

Die heute im Einsatz stehenden Zweikomponenten-(2 K)-Polyurethanlacke auf Basis von Hydroxylgruppen aufweisenden Polyestern oder Polyacrylaten müssen je nach beschichtetem Substrat verschiedene Anforderungen erfüllen.

So sollen 2 K-Klarlacke für die Autoreparatur eine ausgezeichnete Härte, eine sehr gute Haftung auf dem Base coat, eine hervorragende Lösungsmittelbeständigkeit (z.B. gegen Superbenzin) und eine gute Wetterechtheit besitzen. Deshalb werden in diesem Segment bevorzugt Hydroxylgruppen-haltige Polyacrylatharze oder wetterechte Polyester eingesetzt, deren Kettenmoleküle inhärente Steifigkeit besitzen. Zudem sollen moderne Bindemittel die Forderungen des Umweltschutzes nach feststoffreichen und lösungsmittelarmen Lacken (sogenannten "High solid"-Lacken) erfüllen. Hierfür werden besonders niedermolekulare Polyacrylate (EP-A 0 638 591, EP-A 0 680 977) oder Polyester (EP-A 0 705 858) eingesetzt, z.T auch mit Oligomeren oder Reaktivverdünnern versetzt, d.h. organischen Verbindungen, die gleichfalls mit Polyisocyanaten reagieren können (EP-A 0 741 149, EP-A 0 741 158). Der Einsatz solcher Bindemittel in Autoreparaturfüllern, d.h. hoch pigmentierten Systemen, ist gleichfalls bekannt (EP-A 0 680 977, EP-A 0 773 247).

Im Bereich der Autoserienlackierung (z. B. 1 K-Lacke, die mit Melaminharzen vernetzt werden) sind die Anforderungsschwerpunkte für "High solid"-Lacke andersartig. So ist es zusätzlich wichtig, eine gute Kratzfestigkeit und Beständigkeit gegen sauren Regen zu erreichen. Diese Eigenschaften werden durch die Bindemittelstruktur wesentlich beeinflußt. So kommen hier vor allem Acrylatharze mit flexiblen Monomerbausteinen und Bausteinen mit langen linearen oder verzweigten Alkylseitenketten zum Einsatz, die eine inhärente Flexibilität des Beschichtungsmittels bewirken.

Neben dem Automobilbereich kommen OH-fünktionelle Acrylatharze oder Polyesterharze in der allgemeinen Industrie-Lackierung zum Einsatz. Hierunter ist das große Marktsegment der Metallbeschichtung, der Kunststoff- und Holzbeschichtung zu sehen. Während metallische Untergründe überwiegend mit pigmentierten Systemen beschichtet werden, werden Kunststoffund Holzteile vorwiegend mit Klarlacken überzogen. Gerade im Bereich der allgemeinen Industrie-Lackierung werden Bindemittel eingesetzt, die neben guter Applizierbarkeit, rascher Trocknung, guter Wetterbeständigkeit, hohem Glanz und Fülle auch eine hohe Oberflächengüte erzielen. Dies bedeutet, daß die Produkte einen guten Verlauf aufweisen sollten ohne die Bildung der sogenannten Orangenhaut ("orange peel").

Stand der Technik bei diesen unterschiedlichen Applikationsbereichen ist, Acrylatharze und Polyesterharze abzumischen, d.h. physikalische Mischungen oder sogenannte "Blends" herzustellen, um die nötigen speziellen Eigenschaftsprofile zu erhalten. Die Acrylatharze bringen hierbei den Glanz und die Wetterbeständigkeit, der Polyester die Fülle und Oberflächengüte. Für den Kunstharzproduzenten jedoch, der dem Lackhersteller ein fertiges "High solid"-Bindemittel-System anbieten soll, ist es nun sehr aufwendig, neben der Synthese der niedermolekularen Einzelkomponenten auch geeignete verträgliche Bindemittel zu suchen und abzumischen, die zu hoch transparenten Bindemittelsystemen führen. Deshalb gibt es in jüngster Zeit verstärkt Bestrebungen, durch geeignete integrierte Syntheseschritte das Suchen und Abmischen von geeigneten umweltfreundlichen Bindemittelpartner zu umgehen (EP-A 0 776 920). Hier werden Bindemittel auf Polyester-Acrylatbasis beschrieben, die aufgebaut sind aus Massenanteilen von 10 bis 90 % Polyester und 90 bis 10 % Acrylatharz. Die Polyester sind zum Teil Oligomere mit molaren Massen bis 5000 g/mol. Gerade solche Polyester- oder Ester-Oligomere sind interessant, weil sie zu "very high solid" Bindemitteln führen. Ähnliche Produkte sind auch aus US-A-5 460 892 bekannt.

Nachteilig jedoch ist, daß solche Mischsysteme aus Blends von Acrylatpolymeren mit Oligo-Estern und mit entsprechenden polyestermodifizierten Acrylatharzen bei hohem Anteil an Oligo-Ester nicht mehr die gewünschte schnelle Trocknung (Klebfreiheit) aufweisen, eine hohe molekulare Uneinheitlichkeit zeigen und in den chemischen Beständigkeiten schlecht sind. Der hohe Anteil an Oligo-Ester ist verantwortlich für diese negativen Eigenschaften.

Bisher nicht bekannt war, daß Mischsysteme aus Acrylatpolymeren und Polyester-Oligomeren zu einheitlichen transparenten polyestermodifizierten Acrylatharzen mit schneller Trocknung, hoher chemischer Beständigkeit und gutem Verlauf führen, wenn der Anteil an Oligo-Estern beschränkt wird.

Diese neuen, hoch transparenten Produkte eignen sich hervorragend für den Einsatz in feststoffreichen ("high solid") Lackformulierungen, sowohl in Klarlacken als auch in pigmentierten Lacken.

Überraschenderweise wurde gefunden, daß durch Polymerisation von bestimmten olefinisch ungesättigten Monomeren in Anwesenheit von geeigneten Polyestern oder Ester-Oligomeren mit einer gewichtsmittleren molaren Masse $M_w$ von maximal 5000 g/mol in Massenanteilen unter 10 % in der Reaktionsmischung solche Bindemittel in dem vorteilhaften Eintopfverfahren hergestellt werden können, die niedermolekular und vor allem eng verteilt sind und mindestens eine Art einer für eine Vernetzungsreaktion nutzbare Funktionalität (bevorzugt Hydroxylgruppen oder Carboxylgruppen; aber auch z. B. Oxiran-Gruppen oder Carbonylgruppen) enthalten. Diese Produkte eignen sich hervorragend in den oben beschriebenen Anwendungsfeldern.

Die vorliegende Erfindung betrifft auch ein Verfahren zur Herstellung dieser niedermolekularen, molekular einheitlichen modifizierten Acrylatharze.

Der Einsatz solcher Acrylatharze in Beschichtungsmitteln aller Art ist gleichfalls Gegenstand dieser Erfindung

Die erfindungsgemäßen Acrylat-Misch-Copolymerisate **AB** sind gekennzeichnet dadurch, daß sie erhältlich sind durch Polymerisation in einem organischen Lösungsmittel oder in der Masse von einer Monomerenmischung **A** enthaltend Massenanteile von

**Aa** 25 bis 80 % Alkyl(meth)acrylaten, deren Alkylreste linear, verzweigt oder cyclisch sein können und 1 bis 20 C-Atome aufweisen,

**Ab** 1 bis 28 % Hydroxyalkyl(meth)acrylaten, deren Hydroxyalkylreste linear, verzweigt oder cyclisch sein können und 2 bis 20 C-Atome aufweisen,

**Ac** 0,5 bis 20 % $\alpha,\beta$-ungesättigten Carbonsäuren, und

**Ad** 0 bis 55 % aromatischen Vinylverbindungen oder aliphatischen Vinylestern und Vinyläthern, Vinylhalogeniden, olefinisch ungesättigten Ketonen oder Aldehyden, Estern von Glycidyl- oder Methylglycidylalkohol mit olefinisch ungesättigten Carbonsäuren oder Nitrilen von $\alpha,\beta$-ungesättigten Carbonsäuren,

wobei die Summe der Massenanteile für die Komponenten **Aa** bis **Ad** 100 % ergeben muß und die Komponenten **Aa** bis **Ad** vorzugsweise so ausgewählt werden, daß durch Polymerisation dieser Mischung **A** ohne weitere Zusätze theoretisch ein Acrylatcopolymerisat mit einer Säurezahl von mindestens 5 mg/g und einer Hydroxylzahl von 30 bis 130 mg/g resultieren würde, in Gegenwart von radikalbildenden Polymerisationsinitiatoren sowie gegebenenfalls eines Reglers und mindestens eines

**B** Polyesters oder Polyester-Oligomeren (in diesem Text auch als "Oligo-Ester" oder als "Ester-Oligomer" bezeichnet), erhältlich durch Polykondensation aus Polyolen **Ba** und Polycarbonsäuren **Bb,** gegebenenfalls unter Zusatz von Monocarbonsäuren **Bc** und/oder Diisocyanaten **Bd,** mit einer Hydroxylzahl von 50 bis 350 mg/g, einer Säurezahl von 1 bis 50 mg/g und einer gewichtsmittleren molaren Masse $M_w$ von bis zu 5000 g/mol,

mit der Maßgabe, daß die bei der Polymerisation der Mischung **A** gegenwärtigen Polyester oder Polyester-Oligomeren frei sind von olefinischen Doppelbindungen, daß der Massenanteil der Komponente **B** am Endprodukt **AB** weniger als 10 %, bevorzugt 0,5 bis 9,5 %, besonders bevorzugt 1,0 bis 9,0 %, von dessen Masse beträgt und daß dieses Endprodukt eine Säurezahl von 5 bis 45 mg/g, eine Hydroxylzahl von 40 bis 125 mg/g sowie eine gewichtsmittlere molare Masse $M_w$ von maximal 10.000 g/mol und eine Uneinheitlichkeit ($U = M_w/M_n$) von 3 oder kleiner als 3 aufweist. Besonders bevorzugt hat das Endprodukt **AB** eine Säurezahl von 7 bis 40 mg/g, eine Hydroxylzahl von 45 bis 120 mg/g sowie eine gewichtsmittlere molare Masse $M_w$ von maximal 9.000 g/mol und eine Uneinheitlichkeit ($U = M_w/M_n$) von kleiner als 2,95.

Dabei bedeutet $M_n$ die zahlenmittlere molare Masse des Polymeren. Die Säurezahl ist gemäß DIN 53 402 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse $m_{KOH}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Bevorzugt betragen die Massenanteile der Monomeren in der Mischung **A** für **Aa** 30 bis 70 %, für **Ab** 5 bis 25 %, für **Ac** 1 bis 10 %, und für **Ad** 10 bis 50 %, wobei die Summe der Massenanteile immer 100 % beträgt. Es ist besonders wichtig, die obere Grenze für die Komponente **Ab** einzuhalten, da ansonsten die Bindemittel Hydroxylzahlen von über 125 mg/g aufweisen, und bei Verwendung solcher Bindemittel in Lacken spröde Beschichtungen mit ungenügender Haftung auf dem Substrat resultieren. Die Polymerisation der speziellen Monomerenmischung A erfolgt erfindungsgemäß in Gegenwart von Polyester oder Ester-Oligomer **B,** wobei das entstehende polyestermodifizierte Acrylat-Copolymerisat zunehmend als Phasenvermittler für den Polyester oder das Ester-Oligomer in der Mischung wirkt. Dabei entstehen vollständig transparente Harze.

Die für die erfindungsgemäßen modifizierten Acrylatharze verwendeten Rohstoffe und Herstellungsmethoden sind dem Fachmann grundsätzlich bekannt, sodaß nur auf spezielle Auswahlkriterien hingewiesen werden soll.

Geeignete Monomere der Gruppe **Aa** sind beispielsweise Methyl-, Äthyl-, Propyl-, Isopropyl-, Butyl-, tert.-Butyl-, 2-Äthylhexyl-, Lauryl-, 4-tert.-Butylcyclohexyl- und Isobornylester der Acryl- und Methacrylsäure, wobei die Methyl-, Butyl-, 2-Äthylhexyl- und Isobornyl-Acrylate und Methacrylate besonders bevorzugt sind. Geeignete Monomere der Gruppe **Ab** sind beispielsweise Hydroxyäthyl-, 3-Hydroxypropyl-, 4-Hydroxybutyl-, 2-Hydroxypropyl- und 2-Hydroxybutyl-Acrylat sowie die entsprechenden Methacrylate, und Ester der Acryl- und der Methacrylsäure von oligomeren Propylenglykolen. Bevorzugt steht die Hydroxylgruppe entweder in der $\omega$-Position, d. h. an dem Kohlenstoffatom, das am weitesten von der Estergruppe entfernt ist, oder in der $\alpha$-Position zur Estergruppe. Besonders bevorzugt sind Hydroxyäthyl- und 2-Hydroxypropyl-Acrylat und -Methacrylat sowie die Ester von Acryl- und Methacrylsäure mit oligomeren Oxypropylenglykolen. Besonders geeignet als Komponente **Ac** sind Acrylsäure und Methacrylsäure, es können jedoch auch andere aliphatische ungesättigte Dicarbonsäuren oder deren Anhydride wie Maleinsäureanhydrid, Fumarsäure und Itaconsäure sowie deren Halbester eingesetzt werden Besonders bevorzugt sind für **Ac** Acryl- und Methacrylsäure. Komponenten gemäß **Ad** sind beispielsweise Styrol, Vinyltoluole, Vinylchlorid, olefinisch ungesättigte Ketone und Aldehyde wie Methylvinylketon, (Meth)Acrolein, Crotonaldehyd, Diaceton(meth)acrylamid, Diaceton- (meth)acrylat und gemischte Ester von aliphatischen Diolen mit (Meth)- Acrylsäure und Acetessigsäure; Acryl- oder Methacrylnitril, Vinylalkyläther, Glycidyl- oder Methylglycidylester von $\alpha,\beta$-ungesättigten Carbonsäuren, sowie Ester von Vinylalkohol mit verzweigten aliphatischen gesättigten Monocarbonsäuren wie beispielsweise Versaticsäurevinylester. Besonders bevorzugt sind Styrol, Diaceton(meth)-acrylamid, Acryl- und Methacrylnitril, Glycidyl(meth)acrylat, Glycidyläthylmaleinat und die unter dem Handelsnamen ®Veova erhältlichen Vinylester von in $\alpha$-Stellung verzweigten aliphatischen Monocarbonsäuren mit 5 bis 18 Kohlenstoffatomen in der Carbonsäurekomponente.

Die Herstellung der erfindungsgemäßen Copolymerisate kann durch Polymerisation nach üblichen Verfahren, z.B. der Substanz-, Lösungs-, oder Perlpolymerisation durchgeführt werden. Die verschiedenen Polymerisationsverfahren sind gut bekannt und beschrieben unter anderem in Houben-Weyl, Methoden der Organischen Chemie, 4. Auflage, Band 14/1, S. 24-255 (1961).

Das Lösungspolymerisationsverfahren wird für die Herstellung der erfindungsgemäßen Copolymerisate bevorzugt. Dabei werden das Lösungsmittel und das Polykondensat in das Reaktionsgefäß vorgelegt und auf Siedetemperatur geheizt, das Gemisch aus Monomeren und Initiatoren wird kontinuierlich in einer bestimmten Zeit zudosiert. Die Polymerisation wird bevorzugt bei Temperaturen zwischen 100 bis 220 °C, vorzugsweise bei 130 bis 200 °C durchgeführt. Die Polymerisationsreaktion wird mit bekannten Polymerisationsinitiatoren, beispielsweise Peroxiden, Hydroperoxiden, Persäuren, deren Salzen oder Azoverbindungen, gestartet.

Zur Regelung des Polymerisationsgrades können Regler (Kettenüberträger), wie z. B. Mercaptane, Thioglykolsäureester, Cumol, dimeres alpha-Methylstyrol usw. eingesetzt werden.

Die erfindungsgemäß hergestellten, bevorzugt Hydroxyl- oder Carboxylgruppen-haltigen Copolymerisate können in einer weiteren Stufe noch chemisch oder physikalisch modifiziert werden, z.B. durch Umsetzung mit Lactamen oder Lactonen. Eine Umsetzung mit Isocyanat-Verbindungen ist ebenfalls möglich. Auch können niedermolekulare Harnstoffderivate, die in der Lackindustrie zu den sogenannten "sag controlled"-Acrylatharzen führen, mit eingebaut sein. Hierzu wird z. B. das Copolymerisat in Mischung mit Mono- oder Polyaminen vorgelegt, und geeignete ein- oder mehrfünktionelle Isocyanate werden zugegeben.

Die Herstellung der erfindungsgemäßen Copolymerisate kann diskontinuierlich (sog. "batch"-Verfahren) oder kontinuierlich durchgeführt werden. Bei den mehrstufigen Verfahren ist auch eine Ausführungsform möglich, in der die jeweiligen Umsetzungsstufen in separaten Behältern durchgeführt werden. Es ist auch eine Umsetzung möglich, bei der eine erste Stufe kontinuierlich und eine zweite Stufe diskontinuierlich durchgeführt wird.

Als Polykondensat **B** werden Polyesterharze oder Ester-Oligomere eingesetzt, die eine Hydroxylzahl von 50 bis 350, bevorzugt von 70 bis 200 mg/g, eine Säurezahl von 1 bis 50, bevorzugt 3 bis 40 mg/g und eine gewichtsmittlere molare Masse $M_w$ von bis zu 5000, bevorzugt von 500 bis 4000 g/mol (GPC, Standard: Polystyrol) aufweisen, und die frei von olefinischen Doppelbindungen sind. Als Ausgangsstoffe (Edukte) werden Polyole (mehrfunktionelle Hydroxylverbindungen) **Ba**, bevorzugt lineare oder verzweigte aliphatische Polyole, und besonders bevorzugt Dihydroxy-Verbindungen, und Polycarbonsäuren (mehrfunktionelle Carbonsäuren) **Bb**, bevorzugt aromatische Polycarbonsäuren, besonders bevorzugt Dicarbonsäuren jeweils einzeln oder in Mischung eingesetzt. Beide Klassen von Edukten sind frei von olefinischen Doppelbindungen. Neben den bevorzugten difünktionellen Komponenten **Ba** und **Bb** können untergeordnete Anteile von tri- oder höherfunktionellen Bausteinen oder auch monofunktionelle Bausteine in der Mischung eingesetzt werden, wobei für jede der Komponenten **Ba** und **Bb** jeweils unabhängig voneinander eine mittlere Funktionalität von 1,8 bis 2,3 bevorzugt ist. Besonders bevorzugt werden als Komponente **Ba** Glykol, Propandiol-1,2 und -1,3, Butandiol-1,4, Neopentylglykol und Hexandiol-1,6, Di- und Triäthylenglykol, Di- und Tripropylenglykol sowie Monoäther der genannten Glykole, Trimethylolpropan und Pentaerythrit. Besonders bevorzugt werden als Komponente **Bb** die isomeren Phthalsäuren, Trimellithsäure, Trimesinsäure, 2,3- und 2,6-Naphthalindicarbonsäure und Benzophenontetracarbonsäure sowie deren Anhydride. Die Polyesterharze können (durch Mitverwendung bei deren Synthese von mehrfunktionellen Isocyanaten, bevorzugt Diisocyanaten **Bd**) gegebenenfalls Urethangruppen aufweisen und durch die Gegenwart von Monocarbonsäuren **Bc**, die 5 bis 20 C-Atome enthalten, bei der Polykondensation modifiziert sein. Die dafür eingesetzten Rohstoffe und die Herstellungsverfahren sind aus der Literatur, z.B. aus dem Buch "Makromoleküle" von H. G. Elias, Verlag Hüthig + Wepf, Basel-Heidelberg 1971, bekannt.

Die erfindungsgemäßen Copolymerisate eignen sich besonders gut für lacktechnische Anwendungen in 1- bzw. 2-Komponenten-Systemen, insbesondere für sogenannte "high-solid"-Systeme, also für lösungsmittelhaltige Mischungen mit hohem Festkörpergehalt.

Geeignete Lösemittel für die erfindungsgemäßen Copolymerisate sind z.B. aliphatische, cycloaliphatische und aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat oder Propylenglykol-methylätheracetat; Äther, wie Äthylenglykolacetatmonoäthyl-, methyl- oder butyläther; Glykole; Alkohole; Ketone wie Methylisoamylketon, Methylisobutylketon; Lactone und Gemische derartiger Lösemittel. Als Lösemittel sind auch Umsetzungsprodukte von Lactonen mit Glykolen oder Alkoholen einsetzbar.

Die erfindungsgemäßen Acrylatcopolymerisate können auch in Abmischung mit anderen aus der Polyurethanlack-Technologie bekannten Hydroxylgruppen-haltigen Bindemittelkomponenten eingesetzt werden. Auch eine Abmischung mit sogenannten aminischen Reaktivverdünnern ist möglich.

Geeignete andere Hydroxylgruppen-haltige Bindemittelkomponenten sind Polyester-, Polyäther-, Polycarbonat-, Polyurethan- oder Polyacrylatpolyole. Vorzugsweise werden Polyacrylatpolyole und Polyesterpolyole sowie deren Mischungen eingesetzt. Als aminische Reaktivverdünner eignen sich Produkte mit blockierten Aminogruppen wie z. B. Aldimine, Ketimine, Oxazolidine oder Produkte mit freien, jedoch in ihrer Reaktivität abgeschwächten Aminogruppen, wie z.B. substituierte Asparaginsäureester und β-Hydroxyamine. Als geeignete Aldimine seien Reaktionsprodukte von (vorzugsweise aliphatischen) Di- oder Polyaminen mit einem (vorzugsweise aliphatischen) Aldehyd wie die Umsetzungsprodukte von Isophorondiamin oder Bis(4-aminocyclohexyl)methan mit Isobutyraldehyd genannt. Geeignete Ketimine sind z. B. Reaktionsprodukte der oben genannten Amine mit (vorzugsweise aliphatischen) Ketonen wie Aceton oder Methyl-isobutylketon. Geeignete Oxazolidine lassen sich darstellen durch Reaktion von Glycidylestern einbasiger Säuren (wie Glycidyl-versatat) mit (vorzugsweise aliphatischen) Di- oder Polyaminen, wie beispielsweise Isophorondiamin, zu einem β-Hydroxyamin, das mit Aldehyden (bevorzugt aliphatischen Aldehyden wie Isobutyraldehyd) zu einem Oxazolidin umgesetzt wird. Andere geeignete Oxazolidine sind erhältlich durch Umsetzung von cyclischen Ketonen wie Cyclohexanon mit kurzkettigen aliphatischen β-Hydroxyaminen mit 2 bis 8 Kohlenstoffatomen wie z. B. 2-Aminoäthyl-1,3-propandiol oder DL-2-Aminobutanol-1. Geeignete nicht weiter umgesetzte β-Hydroxyamine sind durch Addition von aliphatischen oder cycloaliphatischen Aminen, Diaminen oder Polyaminen an sterisch gehinderte Glycidylester von in α-Stellung mit Alkylresten substituierten aliphatischen Monocarbonsäuren erhältlich; bevorzugt sind Glycidylester der Versatic-Säuren. Geeignete substituierte Asparaginsäureester können durch Umsetzung von Estern olefinisch ungesättigter Dicarbonsäuren mit (cyclo)aliphatischen Diaminen wie Bis-(4-aminocyclohexyl)methan erhalten werden. Bevorzugt besitzen die aminischen Reaktivverdünner mehr als eine (blockierte) Aminogruppe, in diesem Fall werden sie bei der Vernetzungsreaktion eingebaut.

Gegenstand der vorliegenden Erfindung sind weiterhin Beschichtungsmittel, die die erfindungsgemäßen, bevorzugterweise Hydroxylgruppen-haltigen Copolymerisate als Bindemittelkomponente enthalten. Die Copolymerisate können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate sowie Anhydridgruppen enthaltende Verbindungen einzeln oder in Kombination. Der Vernetzer wird jeweils in solch einer Menge zugesetzt, daß das Verhältnis der Anzahl der OH-Gruppen des Copolymerisats zur Anzahl der gegenüber Hydroxylgruppen reaktiven Gruppen des Vernetzers zwischen 0,3 : 1 und 3 : 1 liegt.

Als Härterkomponente geeignete Aminoplastharze sind bevorzugt Harnstoff-, Melaminund/oder Benzoguanaminharze. Es handelt sich hierbei um verätherte Harnstoff-, Melamin- bzw. Benzoguanamin-Formaldehyd-Kondensationsprodukte. Geeignete Massenverhältnisse von Copolymerisat und Aminharz-Vernetzer (jeweils Masse des Festharzes) liegen im Bereich von 50 50 bis 90 : 10. Auch geeignete Phenolharze und ihre Derivate können als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 80 bis 200 °C, z.B. in 10 bis 30 Minuten vorgenommen werden.

Für die Härtung der erfindungsgemäßen Produkte unter Vernetzung eignen sich auch Polyisocyanate, besonders bei moderaten Temperaturen und bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise sind gut geeignet niedermolekulare Polyisocyanate wie Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-Isocyanato-3,3,5-trimethyl-5-isocyanatomethyl-cyclohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, die in an sich bekannter Weise durch Phosgenierung von Anilin-Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate (sogenannte "Lack-Polyisocyanate"), die in der Beschichtungstechnologie üblicherweise eingesetzt werden. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie z.B. in der EP-A 0 470 461 beschrieben.

Zu den besonders bevorzugten modifizierten Polyisocyanaten gehören das N,N',N''-Tris-(6-isocyanatohexyl)-biuret und seine Gemische mit seinen höheren Homologen, sowie das N,N',N''-Tris-(6-isocyanatohexyl)-isocyanurat bzw. dessen Gemische mit seinen höheren, mehr als einen Isocyanuratring aufweisenden Homologen.

Die Vernetzung kann durch Zusatz von flüchtigen organischen Säuren wie Ameisensäure und Essigsäure oder organischen Metallverbindungen, wie Zinnverbindungen und gegebenenfalls tertiären Aminen, vorzugsweise Diäthyläthanolamin, katalysiert werden. Geeignete Zinnverbindungen sind beispielsweise Dibutylzinndilaurat, Dibutylzinndiacetat und Dibutyloxozinn (Dibutylzinnoxid, DBTO).

Für eine Härtung bei erhöhter Temperatur kommen zusätzlich verkappte Polyisocyanate, Polycarbonsäuren bzw. deren Anhydride in Frage.

Die erfindungsgemäßen Copolymerisate eignen sich besonders gut zur Herstellung von festkörperreichen, lösungsmittelhaltigen Klarlacken. Außerdem eignen sie sich gut zur Herstellung von festkörperreichen, lösungsmittelhaltigen pigmentierten Lacken.

Diese festkörperreichen Beschichtungsmittel werden insbesondere angewendet in der Lackierung von Metallblechen (vor allem bei der Automobilserien- und -reparaturlackierung, sowie für allgemeine Industrie-Anwendungen, wie z. B. Stahlbrücken), der Kunststoff- und Holzlackierung sowie im Bereich der Beschichtung von Textilien, Leder, Papier und Baustoffen.

Die erfindungsgemäßen Copolymerisate eignen sich auch gut zur Herstellung von Pulverlacken in Verbindung mit Polycarbonsäureanhydriden. Sie lassen sich auch mit Polycarbonsäureanhydriden umsetzen, wobei die Umsetzungsprodukte als Härter für verschiedene säurehärtbare Kunstharze, insbesondere Epoxidharze, eingesetzt werden können. Von besonderem Interesse ist die Verwendung der erfindungsgemäßen Produkte zusammen mit speziellen Polycarbonsäureteilestern oder Derivaten von Polycarbonsäuren bzw. deren Anhydriden oder Esteranhydriden.

In Beschichtungsmitteln, die mit den erfindungsgemäßen Copolymerisaten hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate, viskositätskontrollierende Zusätze, Mattierungsmittel, UV-Absorber und Lichtschutzmittel, Antioxidantien, Peroxidzersetzer, Entschäumer, Netzmittel, aktive Verdünner und Reaktivverdünner.

Die Beschichtungsmittel können nach bekannten Methoden, beispielsweise durch Streichen, Tauchen, Fluten oder mit Hilfe von Walzen oder Rakeln, insbesondere aber durch Spritzen, elektrostatische und tribologische Auftragung auf das jeweilige Substrat aufgetragen werden. Sie können in der Wärme appliziert werden, gegebenenfalls können sie durch-Eindrücken von superkritischen Lösungsmitteln (z.B. $CO_2$) in eine applikationsfertige Form gebracht werden.

Die Kalthärtung der Lacke erfolgt bei Temperaturen im Bereich von -20 bis +100 °C, vorzugsweise von -10 bis +60 °C. Die Heißhärtung kann in üblicher Weise bei Temperaturen von 80 bis 200 °C, z. B. innerhalb von 10 bis 30 Minuten vorgenommen werden.

Die Erfindung wird in den folgenden Beispielen näher erläutert. In den Ausführungsbeispielen ebenso wie im gesamten Text bedeuten alle Angaben mit der Einheit "%" (Prozent) Massenanteile, sofern nicht anders gekennzeichnet.

Beispiele :

**1) Herstellung von geeigneten Polyester-Oligomeren**

*1a) Herstellung des Polyesters B1*

174 g Tripropylenglykol, 54 g Trimethylolpropan, 82 g 1,6-Hexandiol, 148 g Phthalsäureanhydrid und 75 g Isophthalsäure wurden in einen mit Rührer, Wasserabscheider, Thermometer und Rückflußkühler versehenen Dreihalskolben gefüllt und bei 230 °C auf eine Säurezahl von ca. 8 mg/g verestert.

Nach Abkühlen auf 110 °C wurde der Ansatz mit 69 g Butylacetat auf einen Festkörper-Massenanteil von 80 % verdünnt.

Der Polyester B 1 hatte eine OH-Zahl von ca. 165 mg/g und eine Viskosität (50 %ige Lösung in Butylacetat (BuOAc, bei 23 °C, nach DIN EN ISO 3219) von 30 mPa·s. Durch GPC wurde eine gewichtsmittlere molare Masse $M_w$ von ca. 2670 g/mol und eine Uneinheitlichkeit U von 2,5 (Polystyrol-Eichung) ermittelt.

*1b) Herstellung des Polyesters B2*

Ein Polyester gemäß Beispiel 1a (gleicher Ansatz) wurde nach Erreichen einer Säurezahl von ca. 8 mg/g auf 110 °C gekühlt und mit 16 g Phthalsäureanhydrid umgesetzt. Sobald die Säurezahl einen Wert von ca. 20 mg/g erreicht hatte, wurde mit 72 g BuOAc auf einen Festkörper-Massenanteil von 80 % verdünnt.

Der Polyester B2 hatte eine OH-Zahl von ca. 145 mg/g und eine Viskosität (50 %ige Lösung in BuOAc, bei 23 °C, nach DIN EN ISO 3219) von 34 mPa·s. Durch GPC wurde eine gewichtsmittlere molare Masse $M_w$ von ca. 2980 g/mol und eine Uneinheitlichkeit U von 2,7 (Polystyrol-Eichung) ermittelt.

**2) Herstellung von erfindungsgemäßem Acrylatpolymerisaten**

*2a) Acrylat-Mischcopolymerisat*

In einen mit Rührer, Heiz- und Kühlsystem, Inertgaseinleitung sowie Zugabeeinrichtung ausgestatteten 2 1-Dreihalskolben wurden 122 g Polyesterlösung B1 und 237,4 g Solvent Naphtha 150/180 (Kohlenwasserstoff-Gemisch mit einem Siedebereich von 150 bis 180 °C) vorgelegt, mit Stickstoff inertisiert und auf die Siedetemperatur von 168 °C geheizt. Danach wurden 281,9 g Acrylsäurebutylester, 59,4 g Methacrylsäuremethylester, 227,5 g Hydroxyäthylmethacrylat, 14,8 g Acrylsäure, 405,6 g Styrol und 7,9 g tert.-Dodecylmercaptan über den Tropftrichter innerhalb von 6 Stunden zudosiert. Gleichzeitig wurden 19,8 g Di-tert.-amylperoxid gelöst in 99 g Solvent Naphtha 150/180 zudosiert. Nach 6 Stunden wurde mit 2 g Di-tert.-amylperoxid in 10 g Solvent Naphtha 150/180 nachinitiiert und weitere 2 Stunden nachreagiert. Das Produkt wurde mit 100 g BuOAc auf 70,1 % Festkörper-Massenanteil (bestimmt nach DIN EN ISO 3251) eingestellt.

Das Endprodukt war hoch transparent und zeigte folgende Kenndaten:

Säurezahl 10,8 mg/g, Hydroxylzahl 103 mg/g, dyn. Viskosität (nach DIN EN ISO 3219, bei 23 °C, Lieferform) 4600 mPa·s, dyn. Viskosität (50 %ige Lösung in BuOAc, nach DIN EN ISO 3219, bei 23 °C) 79 mPa·s.
Die gewichtsmittlere molare Masse $M_w$ betrug 6900 g/mol, die Uneinheitlichkeit U war 2,6 (PS-Eichung).

*2b) Acrylat-Mischcopolymerisat*

In einen mit Rührer, Heiz- und Kühlsystem, Inertgaseinleitung sowie Zugabeeinrichtung ausgestatteten 21-Dreihalskolben wurden 68,8 g Polyesterlösung B2 und 240 g Solvent Naphtha 150/180 vorgelegt, mit Stickstoff inertisiert und auf die Siedetemperatur von 168 °C geheizt. Danach wurden 340 g Acrylsäurebutylester, 60 g Methacrylsäuremethylester, 175 g Hydroxyäthylmethacrylat, 15 g Acrylsäure, 410 Styrol und 8 g tert.-Dodecylmercaptan über den Tropftrichter innerhalb von 6 Stunden zudosiert. Gleichzeitig wurden 20 g Di-tert.-amylperoxid gelöst in 100 g Solvent Naphtha 150/180 zudosiert. Nach 6 Stunden wurde mit 2 g Di-tert.-amylperoxid in 10 g Solvent Naphta 150/180 nachinitiiert und weitere 2 Stunden nachreagiert. Das Produkt wurde durch Zusatz von 100 g BuOAc auf 69,2 % Festkörper-Massenanteil (nach DIN EN ISO 3251) eingestellt.

Das Endprodukt ist hoch transparent und zeigt folgende Kenndaten: Säurezahl 11 mg/g, Hydroxylzahl 75 mg/g, dyn. Viskosität (nach DIN EN ISO 3219, 23 °C, Lieferform) 3200 mPa·s, dyn. Viskosität (50 %ige Lösung in BuOAc, DIN EN ISO 3219, bei 23 °C) 80 mPa·s. Durch GPC wurde eine gewichtsmittlere molare Masse $M_w$ von ca. 7510 g/mol und eine Uneinheitlichkeit U von 2,9 (Polystyrol-Eichung) ermittelt.

**3) Herstellung von Vergleichs-Acrylatcopolymerisaten**

*3a) Vergleichs-Acrylatcopolymerisat*

Die Herstellung des Vergleichscopolymerisats 3a erfolgte analog Beispiel 2a, jedoch ohne Polyester B1.

Das transparente Copolymerisat 3a zeigte folgende Kenndaten:

Festkörper-Massenanteil 69,9 % (DIN EN ISO 3251), Säurezahl 12,5 mg/g, Hydroxylzahl 108 mg/g, dyn. Viskosität (nach DIN EN ISO 3219, bei 23 °C, Lieferform) 6400 mPa·s, dyn. Viskosität (50 %ige Lösung in BuOAc, nach DIN EN ISO 3219, bei 23 °C) 95 mPa·s. Durch GPC wurde eine gewichtsmittlere molare Masse $M_w$ von ca. 8100 g/mol und eine Uneinheitlichkeit U von 2,9 (Polystyrol-Eichung) ermittelt.

*3b) Vergleichs-Acrylatcopolymerisat*

Die Herstellung des Vergleichscopolymerisats 3b erfolgte analog 2b, jedoch ohne Polyester B2.

Das transparente Copolymerisat 3b zeigte folgende Kenndaten:

Festkörper-Massenanteil 70,2 % (DIN EN ISO 3251), Säurezahl 12,1 mg/g, Hydroxylzahl 79 mg/g, dyn. Viskosität (nach DIN EN ISO 3219, bei 23 °C, Lieferform) 8400 mPa·s, dyn. Viskosität (50 %ige Lösung in BuOAc, nach DIN EN ISO 3219, bei 23 °C) 85 mPa·s. Durch GPC wurde eine gewichtsmittlere molare Masse $M_w$ von ca. 8600 g/mol und eine Uneinheitlichkeit U von 3,0 (Polystyrol-Eichung) ermittelt.

### 3c, d, e) Vergleichs-Acrylat-Mischcopolymerisate mit höheren Anteilen an Polyestern

Es wurden analog Acrylat-Mischcopolymerisat gemäß Beispiel 2a Mischsysteme hergestellt mit einem Massenanteil an Oligo-Estern von über 10 % (Tabelle 1). Die Lösemittelzusammensetzung wurde analog dem Misch-Copolymerisat 2a eingestellt.

Tabelle 1:

| Vergleichs-Misch-Copolymerisat | Einheit | 3 c | 3 d | 3 e |
|---|---|---|---|---|
| Massenanteil an Oligo-Ester | % | 12 | 25 | 50 |
| Festkörper-Massenanteil | % | 69,2 | 70,2 | 69,6 |
| Säurezahl | mg/g | 9,9 | 9,9 | 8,7 |
| Hydroxylzahl | mg/g | 106 | 112 | 116 |
| Viskosität (Lieferform) | mPa·s | 2980 | 5475 | 1480 |
| Viskosität (50 %ig in BuOAc) | mPa·s | 66 | 51 | 50 |
| $M_w$ | g/mol | 6320 | 5475 | 5045 |
| $U = M_w/M_n$ | | 3,1 | 3,1 | 3,2 |

### 3f) Vergleichs-Acrylat-Mischcopolymer mit hoher OH-Zahl (Gehalt)

In einen mit Rührer, Heiz- und Kühlsystem, Inertgaseinleitung sowie Zugabeeinrichtung ausgestatteten 2 1 - Dreihalskolben wurden 122 g Polyesterlösung B1 und 237,4 g Solvent Naphtha 150/180 vorgelegt, mit Stickstoff inertisiert und auf die Siedetemperatur von 168 °C geheizt. Danach wurden 281,9 g Acrylsäurebutylester, 59,4 g Methacrylsäuremethylester, 309,1 g Hydroxyäthylmethacrylat, 14,8 g Acrylsäure, 325,2 g Styrol und 7,9 g tert.-Dodecylmercaptan über den Tropftrichter innerhalb von 6 Stunden zudosiert. Gleichzeitig wurden 19,8 g Di-tert.-amylperoxid gelöst in 99 g Solvent Naphtha 150/180 zudosiert. Nach 6 Stunden wurde mit 2 g Di-tert.-amylperoxid in 10 g Solvent Naphtha 150/180 nachinitiiert und weitere 2 Stunden nachreagiert. Das Produkt wurde mit 100 g BuOAc auf 70,4 % Festkörper-Massenanteil (nach DIN EN ISO 3251) eingestellt.
Das transparente Vergleichsprodukt 3f zeigte folgende Kenndaten:

Säurezahl 10,1 mg/g, Hydroxylzahl 140 mg/g, dyn. Viskosität (nach DIN EN ISO 3219, 23°C, Lieferform) 5140 mPa·s, dyn. Viskosität (50%ige Lösung in BuOAc, DIN EN ISO 3219, bei 23°C) 82 mPa·s. Durch GPC wurde eine gewichtsmittlere molare Masse $M_w$ von 6860 g/mol und eine Uneinheitlichkeit U von 2,8 (PS-Eichung) ermittelt.

### 4) Transparenz von Acrylat-Mischcopolymerisat 2a und 2b im Vergleich zu Blends aus Polyester B1 oder B2 mit Vergleichscopolymerisat 3a oder 3b

Die Transparenz von Lösungen der erfindungsgemäßen Acrylat-Misch-Copolymerisate 2a und 2b wurde gegenüber der Transparenz von Lösungen der Mischungen von Vergleichscopolymerisat 3a und 3b mit entsprechenden Mengen Polyester B und B2 (Beispiele 1a und 1b) mit Hilfe einer Trübungsmessung beurteilt. Die Mengen an Vergleichscopolymerisat und Polyester wurden dabei so gewählt, daß die Massenverhältnisse der Komponenten in den Mischungen gleich denen in den erfindungsgemäßen Misch-Copolymerisaten waren.
Der Massenanteil des erfindungsgemäßen Acrylat-Misch-Copolymerisats (bzw die Summe der Massenanteile an Copolymerisat und Polyester) in der Meßlösung betrug ca. 70 %.
Trübungsmessung in einem Nephelometer nach Hach (Typ 2100 N):

| | NTU |
|---|---|
| Acrylat-Misch-Copolymerisat 2a | 0,6 |
| Acrylat-Misch-Copolymerisat 2b | 0,7 |
| Mischung Vergleichspolymerisat 3a + Polyester B 1 | 1,6 |
| Mischung Vergleichspolymerisat 3b + Polyester B2 | 1,8 (Schleier) |

"NTU" sind nephelometrische Trübungseinheiten; als Vergleich dient eine frisch hergestellte Formazinlösung (5 g Hydrazinsulfat in 400 ml Wasser und 50 g Hexamethylentetramin in 400 ml Wasser lösen, die Lösungen vermischen und auf 1000 ml auffüllen); nach 48 h Aufbewahrungszeit bei Raumtemperatur (20 °C) bildet sich eine Trübung entsprechend 4000 NTU, die über einige Monate unverändert bleibt. Ein niedriger Wert bedeutet geringe Trübung.

**Ergebnis:**

Die Mischungen aus Vergleichspolymerisat und Polyester weisen schlechtere Transparenz auf als die erfindungsgemäßen Acrylat-Misch-Copolymerisate.

Die Transparenz der Mischungen reicht zur Formulierung von Klarlacken nicht aus (dabei darf die nach Hach bestimmte Trübung maximal 1,5 betragen).

**5) Herstellung von "high solid"-Klarlacken**

Zur Herstellung der erfindungsgemäßen härtbaren Beschichtungsmittel werden die polymeren Bindemittel-Komponenten (Acrylat-Misch-Copolymerisat oder Polyesteroligomer) mit Lösungsmitteln und Vernetzern im beschriebenen Mischungsverhältnis (Tabelle 2) gemischt und mit weiterem Verdünnungsmittel (Universalverdünnung Solvesso 100 : Butylacetat : Xylol im Massenverhältnis 2 : 10 : 3) auf die Spitzviskosität (Auslaufzeit von 21 s mit dem Auslaufbecher nach DIN 52 211, 4 mm, 23 °C) eingestellt.

## Tabelle 2

| Lack | 1 | 2(Vgl.) | 3(Vgl.) | 4(Vgl.) | 5(Vgl.) |
|---|---|---|---|---|---|
| Bindemittel aus Beispiel | 2 a | 3 c | 3 d | 3 e | 1 a |
| Polyester-Massenanteil (%) | 9 | 12 | 25 | 50 | 100 |
| Festkörper-Massenanteil (%) | 70,1 | 69,2 | 70,2 | 69,6 | 80 |
| Hydroxylzahl (mg/g) | 103 | 106 | 112 | 116 | 165 |
| Viskosität* (mPa·s) | 79 | 66 | 51 | 50 | 30 |
| Bindemittel (Tle) | 82 | 82 | 82 | 82 | 82 |
| Solvesso 100 (Tle) | 1,5 | 1,5 | 1,5 | 1,5 | 1,5 |
| Xylol (Tle) | 2,5 | 2,5 | 2,5 | 2,5 | 2,5 |
| Butylacetat (Tle) | 11 | 11 | 11 | 11 | 11 |
| Desmodur N3390 (1:1) (Tle) | 22,5 | 22,9 | 24,5 | 25,2 | 41,2 |
| Universalverdünnung (Tle) | 29 | 29 | 25 | 19 | 27 |
| Auslaufzeit (s) | 21 | 21 | 21 | 21 | 21 |

Vgl. = Vergleichslacke        *: 50 %ige Lösung in Butylacetat

Tle = Teile, Massenteile

**6) Herstellung von pigmentierten Decklacken**

Aus dem erfindungsgemäßen Acrylat-Misch-Copolymerisat 2a und dem Vergleichsacrylatcopolymerisat 3a wurden weiß pigmentierte "high solid"-Decklacke nach folgender Rezeptur hergestellt:

Komponente 6a:

| Mischung 6a1 | 50,7 g | Acrylat-Misch-Copolymerisat 2a bzw. Vergleichs-Copolymerisat 3a; jeweils 70 %ig in BuOAc |
| | 36,2 g | ®Kronos 2310 Titandioxid (Kronos Titan GmbH) |
| | 1,75 g | ®Additol VXL 62612 (Netzmittel, Vianova Resins GmbH) |
| | 0,35 g | ®Additol XL 270 (Fließadditiv, Vianova Resins GmbH) |
| | 3,55 g | Xylol |
| | 3,55 g | Methoxypropylacetat |
| | 3,55 g | Butylacetat |

| Mischung 6a2 | 0,20 g | ®Additol VXL 4930 (Verlaufmittel, Vianova Resins GmbH) |
| | 0,10 g | ®Metatin 712 (Zinn-Katalysator, Acima GmbH) |
| | 0.05 g | Diäthyläthanolamin |

Die Mischung 6a1 wurde in der angegebenen Reihenfolge zusammengefügt und ca. 30 min in einer Perlmühle homogenisiert. Anschließend wurde die Mischung 6a2 zugegeben und eingemischt, die erhaltene Mischung 6a wurde ebenfalls gut homogenisiert. Die Auslaufzeit der Mischung 6a (DIN 53 211, 4 mm, 23 °C) betrug 100 s. Das Pigment/ Bindemittel-Massenverhältnis betrug 0,8 : 1. Kurz vor der Verarbeitung wurde die Komponente 6b zu der Mischung 6a gegeben:

| Komponente 6b | 10,85 g | ®Desmodur N 3390, 90%ige Lösung (Bayer AG) |
| | 5,4 g | einer Mischung von BuOAc, Shellsol A und Xylol im Massenverhältnis 60:15:25 |

Die Zugabemenge der Komponente 6b entspricht 100 %iger Vernetzung (die Menge an Isocyanatkomponente ist so bemessen, daß das Verhältnis der Stoffmenge von Isocyanatgruppen zur Stoffmenge von Hydroxylgruppen 1 ist). Die Mischung von 6a und 6b wurde durch Zugabe von "Spritzverdünnung" (Mischung von BuOAc, Shellsol A und Xylol im Massenverhältnis 60:15:25) auf eine Auslaufzeit im 4 mm-DIN-Becher von 21 s (DIN 53 211, 23 °C) eingestellt.

### 7) Lacktechnische Ausprüfung

### 7a) "high solid" Klarlacke

Die wie unter 5 gefertigten Klarlacksysteme wurden mittels eines 100 μm-Rakel auf gereinigte Glasplatten appliziert und unter den Bedingungen der Lufttrocknung geprüft (Tabelle 3).

Tabelle 3

| Lack | 1 | 2(Vgl.) | 3(Vgl.) | 4(Vgl.) | 5(Vgl.) |
|---|---|---|---|---|---|
| Festkörper-Massenanteil* (%) | 53,5 | 53,9 | 55,4 | 56,2 | 65,7 |
| Auslaufzeit (s) nach | | | | | |
| 0 h | 21 | 21 | 21 | 21 | 21 |
| 4 h | 31,5 | 26 | 27,5 | 22,5 | 28,5 |
| 6h | 41,5 | 33 | 33 | 26 | 37 |
| Klebfrei-Trocknung | 6 h | 20 h | 24 h | 24 h | 48 h |
| Chemikalienfestigkeit nach 4 d Raumtemperaturtrocknung | | | | | |
| Superbenzin, Einwirkung 3 h | i.O. | i.O. | klebt | klebt | klebt |
| Beständigkeit gegen Xylol | 70 Min. | 45 Min. | 45 Min. | 30 Min. | 5 Min. |

*: gemäß DIN EN ISO 3251 (2 g + 2 ml Äthylacetat, 1 h, 125 °C)
i.O.: in Ordnung

**Ergebnis:**

Der erfindungsgemäße Lack 1 besitzt im Vergleich zu Lacken mit einem Massenanteil an Polyester-Oligomeren über 10 % oder dem reinen Oligo-Ester-Lack eine viel schnellere Klebfreitrocknung und eine erheblich bessere Beständigkeit gegen Superbenzin und vor allem Xylol. Das raschere Abbinden des Systems zeigt sich auch in der Abnahme der Topfzeit (rascherer Anstieg der Auslaufzeit bei Lagern).

**7b) Weißlacke**

Mit den gemäß **6** hergestellten Weißlacken aus dem Acrylat-Misch-Copolymerisat 2a und dem Vergleichsacrylatcopolymerisat 3a wurden die folgenden Untersuchungsergebnisse erhalten:

7ba) Feststoffgehalt des Weißlackes

Der Feststoff-Massenanteil wurde nach DIN EN ISO 3251 (2 g der Probe + 2 ml Äthylacetat, Trockenrückstand nach 1 h bei 125 °C) bestimmt.

| | |
|---|---|
| Lack mit Acrylat-Misch-Copolymerisat 2a | 62,5 % |
| Vergleichslack mit Acrylatcopolymerisat 3a | 60,1 % |

7bb) Glanz, micro-Tri-gloss 20°

gemessen bei einer Trockenfilmstärke von 50 bis 60 μm

| | |
|---|---|
| Lack mit Acrylat-Misch-Copolymerisat 2a | 92 |
| Vergleichslack mit Acrylatcopolymerisat 3a | 90 |

7bc) Wave-scan

| | Lack mit Acrylat-Misch-Copolymerisat 2a | | | |
|---|---|---|---|---|
| Schichtstärke (μm) | 25 | 30 | 35 | 40 |
| $L_k$ | 59 | 52 | 44 | 29 |

| | Vergleichslack mit Acrylatcopolymerisat 3a | | | |
|---|---|---|---|---|
| Schichtstärke (μm) | 25 | 30 | 35 | 40 |
| $L_k$ | 60 | 60 | 60 | 61 |

Mit der sogenannten Wave-Scan-Methode kann die Oberflächenstruktur ("orange peel") einer Beschichtung objektiv beurteilt werden. Dabei wird über eine Meßstrecke von 10 cm die Reflexion eines Laserstrahls (Einstrahlwinkel = Beobachtungswinkel = 60 °) gemessen. Angegeben wird die "Langwelligkeit" ("long wave"), die sich aus der normierten Varianz $a$ (des durch eine Fourier-Analyse ermittelten langwelligen Anteils von charakteristischen Längen zwischen 0,6 und 10 mm) der reflektierten Lichtintensität $I_s$ längs der Meßstrecke von s = 0 cm bis s = 10 cm errechnet nach

$$a = \frac{1000}{s \times \bar{I}^2} \times \int (I_s - \bar{I})^2 \, ds$$

wobei $\bar{I}$ die mittlere reflektierte Lichtintensität in der Meßstrecke ist.

Die sogenannte Langwelligkeit ist dann definiert als

$$L = 67 \cdot \lg (1 + a / 20)$$

wobei für die "korrigierte Langwelligkeit" $L_k$ offensichtliche Ausreißer in der Reflexions-Intensität eliminiert werden. Je größer der gemessene Wert für die (korrigierte) Langwelligkeit $L_k$ ist, desto stärker zeigt die betreffende Probe die Oberflächenbeschaffenheit, die "orange peel" genannt wird.

7bd) Trocknungsverhalten

Pendelhärteentwicklung nach König , Angabe der Pendelhärte in-Sekunden

| forciert getrocknet (30 min bei 80 °C); Härte nach | 1 h | 1 d |
|---|---|---|
| Lack mit Acrylat-Misch-Copolymerisat 2a | 95 | 135 |
| Vergleichslack mit Acrylatcopolymerisat 3a | 86 | 126 |
| Raumtemperaturtrocknung, Härte nach | 1 d | 7 d |
| Lack mit Acrylat-Misch-Copolymerisat 2a | 33 | 84 |
| Vergleichslack mit Acrylatcopolymerisat 3a | 24 | 66 |

**Ergebnis:**

Der erfindungsgemäße Lack besitzt zum Vergleichslack bei gleicher Auslaufzeit einen höheren Festkörper-Massenanteil, eine höhere Pendelhärte mit gleichartigem oder rascheren Anstieg, einen vergleichbaren Glanz und eine bessere Oberflächenqualität (kein "orange peel", ermittelt mit der "wave-scan"-Methode).

7bf) Haftung

Mit dem Acrylat-Misch-Copolymerisat 2a und dem Vergleichs-Acrylatcopolymerisat 3f wurden gemäß 6 Weißlacke hergestellt.
Für den Lack basierend auf dem Vergleichs-Acrylatcopolymerisat 3f wurde die Menge an Härterkomponente (Komponente 6b) dermaßen erhöht, daß die Zugabemenge einer 100 %igen Vernetzung (die Menge an Isocyanatkomponente ist so bemessen, daß das Verhältnis der Stoffmenge von Isocyanatgruppen zur Stoffmenge von Hydroxylgruppen 1 ist) entspricht. Die erhaltenen Lacksysteme wurden durch Spritzen auf entfettete Eisenbleche appliziert (Trockenfilmstärke ca. 50μm) und die Haftung mittels Gitterschnitt (DIN 53151) nach 7 Tagen Trocknung bei Raumtemperatur sowie nach forcierter Trocknung (30 min bei 80 °C) geprüft.

**Raumtemperaturtrocknung, Gitterschnitt (DIN 53151) nach 7 Tagen:**

Lack mit Acrylat- Mischcopolymerisat 2a:      Gt1
Vergleichslack mit Acrylatcopolymerisat 3f:      Gt4 bis Gt5

**forciert getrocknet (30 min bei 80 °C), Gitterschnitt (DIN 53151) nach 1 Tag:**

Lack mit Acrylat- Mischcopolymerisat 2a:      Gt1 bis Gt 2
Vergleichslack mit Acrylatcopolymerisat 3f:      Gt5

Gitterschnitt: Beurteilung, Gt0 = bester Wert, Gt5 = schlechtester Wert

**Ergebnis:**

Der erfindungsgemäße Lack zeigt zum Vergleichslack bei gleicher Trockenfilmstärke sowohl nach Trocknung bei Raumtemperatur als auch nach forcierter Trocknung (30 min bei 80 °C) viel bessere Haftung auf kaltgewalztem Eisenblech. Der Vergleichslack auf Basis des Acrylatcopolymerisats 3f ist aufgrund seiner ungenügenden Haftung für den Einsatz in industriellen Einschichtlackierungen unbrauchbar.

**Patentansprüche**

1. Acrylat-Misch-Copolymerisate **AB**, erhältlich durch Polymerisation einer Monomerenmischung **A** in einem organischen Lösungsmittel oder in der Masse, wobei die Monomerenmischung **A** Massenanteile enthält von

   **Aa**  25 bis 80 % Alkyl(meth)acrylaten, deren Alkylreste linear, verzweigt oder cyclisch sein können und 1 bis 20 C-Atome aufweisen,

   **Ab**  1 bis 28 % Hydroxyalkyl(meth)acrylaten, deren Hydroxyalkylreste linear, verzweigt oder cyclisch sein können und 2 bis 20 C-Atome aufweisen,

   **Ac**  0,5 bis 20 % $\alpha,\beta$-ungesättigten Carbonsäuren, und

   **Ad**  0 bis 55 % aromatischen Vinylverbindungen oder aliphatischen Vinylestern und Vinyläthern, Vinylhalogeniden, olefinisch ungesättigten Ketonen oder Aldehyden, Estern von Glycidyl- oder Methylglycidylalkohol mit olefinisch ungesättigten Carbonsäuren, oder Nitrilen von $\alpha,\beta$-ungesättigten Carbonsäuren,

   wobei die Summe der Massenanteile für die Komponenten **Aa** bis **Ad** 100 % ergibt, in Gegenwart von radikalbildenden Polymerisationsinitiatoren und mindestens eines

   **B**  Polyesters oder Polyester-Oligomeren, erhältlich durch Polykondensation aus Polyolen **Ba** und Polycarbonsäuren **Bb**, mit einer Hydroxylzahl von 50 bis 350 mg/g, einer Säurezahl von 1 bis 50 mg/g und einer gewichtsmittleren molaren Masse $M_w$ von bis zu 5000 g/mol.

   mit der Maßgabe, daß die bei der Polymerisation der Mischung **A** gegenwärtigen Polyester oder Polyester-Oligomeren frei sind von olefinischen Doppelbindungen, daß der Massenanteil der Komponente **B** am Endprodukt **AB** unter 10 % von dessen Masse beträgt und dieses Endprodukt eine Säurezahl von 5 bis 45 mg/g, eine Hydroxylzahl von 40 bis 125 mg/g sowie eine gewichtsmittlere molare Masse $M_w$ von maximal 10.000 g/mol und eine Uneinheitlichkeit ($U = M_w / M_n$) von 3 oder kleiner als 3 aufweist.

2. Acrylat-Misch-Copolymerisate nach Anspruch 1, **dadurch gekennzeichnet, daß** die Komponenten **Aa** bis **Ad** so ausgewählt werden, daß durch Polymerisation dieser Mischung A ohne weitere Zusätze theoretisch ein Acrylatcopolymerisat mit einer Säurezahl von mindestens 5 mg/g und einer Hydroxylzahl von 30 bis 130 mg/g resultieren würde.

3. Acrylat-Misch-Copolymerisate nach Anspruch 1, **dadurch gekennzeichnet, daß** der Polyester **B** durch Polykondensation von aliphatischen Hydroxyl-Verbindungen **Ba** und aromatischen Carboxyl-Verbindungen **Bb** erhältlich ist und einen gewichtsmittlere molare Masse $M_w$ von 500 bis 4.000 g/mol, eine Säurezahl von 1 bis 50 mg/g und eine Hydroxylzahl von 50 bis 300 mg/g aufweist, wobei die Edukte **Ba** und **Bb** frei sind von olefinischen Doppelbindungen und jeweils unabhängig voneinander eine mittlere Funktionalität von 1,8 bis 2,3 besitzen.

4. Acrylat-Misch-Copolymerisate nach Anspruch 1, **dadurch gekennzeichnet, daß** die Polyester **B** durch Polykondensation von linearen oder verzweigten aliphatischen Dihydroxyverbindungen und aromatischen Dicarbonsäuren erhältlich sind.

5. Verfahren zur Herstellung von Acrylat-Misch-Copolymerisaten **AB** nach Anspruch 1, **dadurch gekennzeichnet, daß** in der ersten Stufe durch Polykondensation in der Masse von aliphatischen linearen oder verzweigten mehrfunktionellen Hydroxylverbindungen **Ba** und aromatischen mehrfunktionellen Carbonsäuren **Bb** ein Polyester hergestellt wird, im zweiten Schritt zu diesem Polyester eine Monomerenmischung **A** zugefügt wird, enthaltend Massenanteile von

   25 bis 80 % Alkyl(meth)acrylaten **Aa**, deren Alkylreste linear, verzweigt oder cyclisch sein können und 1 bis 20 C-Atome aufweisen,
   1 bis 28 % Hydroxyalkyl(meth)acrylaten **Ab**, deren Hydroxyalkylreste linear, verzweigt oder cyclisch sein können und 2 bis 20 C-Atome aufweisen,
   0,5 bis 20 % $\alpha,\beta$-ungesättigten Carbonsäuren **Ac**, und
   0 bis 55 % der Komponente **Ad**, enthaltend eine oder mehrere Verbindungen ausgewählt aus aromatischen Vinylverbindungen, aliphatischen Vinylestern und Vinlyäthern, Vinylhalogeniden, olefinisch ungesättigten Ketonen oder Aldehyden, Estern von Glycidyl- oder Methylglycidylalkohol mit olefinisch ungesättigten Carbonsäuren, und Nitrilen von $\alpha,\beta$-ungesättigten Carbonsäuren,

wobei die Summe der Massenanteile für die Komponenten **An** bis **Ad** in der Monomermischung **A** 100 % ergibt, und im dritten Schritt diese Monomerenmischung in Gegenwart des Polyesters **B** ausgelöst durch radikalbildende Initiatoren in der Masse oder in Gegenwart eines inerten organischen Lösungsmittels polymerisiert wird, wobei der Polyester **B** frei ist von olefinischen Doppelbindungen, wobei der Massenanteil des Polyesters **B** in dem Acrylat-Misch-Copolymerisat **AB** weniger als 10 % von dessen Masse beträgt, und das Acrylat-Misch-Copolymerisat eine Säurezahl von 5 bis 45 mg/g, eine Hydroxylzahl von 40 bis 125 mg/g, eine gewichtsmittlere molare Masse $M_w$ von maximal 10.000 g/mol und eine Uneinheitlichkeit U von 3 oder kleiner als 3 aufweist.

6. Beschichtungsmittel, enthaltend Acrylat-Misch-Copolymerisate nach Anspruch 1 und Härter, ausgewählt aus Aminoplastharzen, blockierten und unblockierten mehrfunktionellen Isocyanaten, mehrfunktionellen Carbonsäuren sowie Säure-Anhydrid-Gruppen enthaltenden Verbindungen, wobei das Verhältnis der Anzahl der Hydroxylgruppen des Acrylat-Misch-Copolymerisats zur Anzahl der gegenüber Hydroxylgruppen reaktiven Gruppen des Vernetzers zwischen 0,3 : 1 und 3:1 liegt.

7. Beschichtungsmittel nach Anspruch 6, zusätzlich enthaltend andere Hydroxylgruppen-haltige Bindemittelkomponenten ausgewählt aus Polyester-, Polyäther-, Polycarbonat-, Polyurethan- oder Polyacrylatpolyolen, oder aminische Reaktivverdünner ausgewählt aus Aldiminen, Ketiminen, Oxazolidinen sowie β-Hydroxyaminen und substituierten Asparaginsäureestern.

8. Verwendung von Beschichtungsmitteln nach Anspruch 6 irr der Lackierung von Metallblechen, von Kunststoffen, von Holz, und bei der Beschichtung von Leder, Textilien, Papier und Baustoffen.

9. Verwendung der Acrylat-Misch-Copolymerisate nach Anspruch 1 zur Herstellung von Pulverlacken.

10. Verwendung von Umsetzungsprodukten der Acrylat-Misch-Copolymerisate nach Anspruch 1 mit Polycarbonsäureanhydriden als Härter für säurehärtbare Kunstharze.

## Claims

1. An acrylate copolymer **AB** obtainable by addition polymerization of a monomer mixture **A**, in an organic solvent or in bulk, the monomer mixture **A** comprising proportions by mass of

    **Aa** from 25 to 80% of $C_1$-$C_{20}$-alkyl (meth)acrylates whose alkyl radicals can be linear, branched or cyclic,
    **Ab** from 1 to 28% of $C_2$-$C_{20}$-hydroxyalkyl (meth)acrylates whose hydroxyalkyl radicals can be linear, branched or cyclic,
    **Ac** from 0.5 to 20% of $\alpha,\beta$-unsaturated carboxylic acids, and
    **Ad** from 0 to 55% of aromatic vinyl compounds or aliphatic vinyl esters and vinyl ethers, vinyl halides, olefinically unsaturated ketones or aldehydes, esters of glycidyl alcohol or methylglycidyl alcohol with olefinically unsaturated carboxylic acids, or nitriles of $\alpha,\beta$-unsaturated carboxylic acids,

    the sum of the proportions by mass of the components **Aa** to **Ad** being 100%,
    in the presence of free-radical polymerization initiators and of at least one

    **B** polyester or polyester oligomer obtainable by polycondensation of polyols **Ba** and polycarboxylic acids **Bb,** and having a hydroxyl number of from 50 to 350 mg/g, an acid number of from 1 to 50 mg/g and a weight-average molar mass $M_w$ of up to 5000 g/mol,

    with the provisos that the polyesters or polyester oligomers present during the addition polymerization of the mixture **A** are free from olefinic double bonds, that the proportion by mass of component **B** in the end product **AB** is less than 10% of the mass thereof and that this end product has an acid number of from 5 to 45 mg/g, a hydroxyl number of from 40 to 125 mg/g and a weight-average molar mass $M_w$ of not more than 10,000 g/mol and a polydispersity (= $M_w/M_n$; nonuniformity) of 3 or less than 3.

2. An acrylate copolymer as claimed in Claim 1, wherein the components **Aa** to **Ad** are selected such that polymerization of this mixture **A** without further additions would result theoretically in an acrylate copolymer having an acid number of at least 5 mg/g and a hydroxyl number of from 30 to 130 mg/g.

3. An acrylate copolymer as claimed in Claim 1, wherein the polyester **B** is obtainable by polycondensation of aliphatic hydroxyl compounds **Ba** and aromatic carboxyl compounds **Bb** and has a weight-average molar mass $M_w$ of from 500 to 4000 g/mol, an acid number of from 1 to 50 mg/g and a hydroxyl number of from 50 to 300 mg/g, the precursors **Ba** and **Bb** being free from olefinic double bonds and possessing in each case independently of one another an average functionality of from 1.8 to 2.3.

4. An acrylate copolymer as claimed in Claim 1, wherein the polyesters **B** are obtainable by polycondensation of linear or branched aliphatic dihydroxy compounds and aromatic dicarboxylic acids.

5. A process for preparing an acrylate copolymer **AB** as claimed in Claim 1, wherein in the first stage, by polycondensation in bulk of aliphatic linear or branched polyfunctional hydroxyl compounds **Ba** and aromatic polyfunctional carboxylic acids **Bb,** a polyester is prepared, in the second step a monomer. mixture **A** is added to this polyester, the said mixture **A** comprising proportions by mass of
from 25 to 80% of $C_1$-$C_{20}$-alkyl (meth)acrylates **Aa** whose alkyl radicals can be linear, branched or cyclic,
from 1 to 28% of $C_2$-$C_{20}$-hydroxyalkyl (meth)acrylates **Ab** whose hydroxyalkyl radicals can be linear, branched or cyclic,
from 0.5 to 20% of $\alpha,\beta$-unsaturated carboxylic acids **Ac** and
from 0 to 55% of component **Ad** comprising one or more compounds selected from aromatic vinyl compounds, aliphatic vinyl esters and vinyl ethers, vinyl halides, olefinically unsaturated ketones or aldehydes, esters of glycidyl alcohol or methylglycidyl alcohol with olefinically unsaturated carboxylic acids, and nitriles of $\alpha,\beta$-unsaturated carboxylic acids,
the sum of the proportions by mass of the components **Aa** to **Ad** in the monomer mixture **A** being 100%, and in the third step this monomer mixture is polymerized in the presence of the polyester **B** initiated by free-radical initiators, in bulk or in the presence of an inert organic solvent, the polyester **B** being free from olefinic double bonds, the proportion by mass of the polyester **B** in the acrylate copolymer **AB** being less than 10% of its mass, and the acrylate copolymer having an acid number of from 5 to 45 mg/g, a hydroxyl number of from 40 to 125 mg/g and a weight-average molar mass $M_w$ of not more than 10,000 g/mol and a polydispersity of 3 or less than 3.

6. A coating composition comprising an acrylate copolymer as claimed in Claim 1 and a curing agent selected from amino resins, blocked and non-blocked polyfunctional isocyanates, polyfunctional carboxylic acids and also compounds containing acid anhydride groups, the ratio of the number of hydroxyl groups of the acrylate copolymer to the number of hydroxyl-reactive groups of the crosslinker lying between 0.3:1 and 3:1.

7. The coating compositions as claimed in Claim 6, additionally comprising other hydroxyl-containing binder components selected from polyester-, polyether-, polycarbonate-, polyurethane- or polyacrylate polyols, or amine-type reactive diluents selected from aldimines, ketimines, oxazolidines and also $\beta$-hydroxyamines and substituted aspartic esters.

8. The use of a coating composition as claimed in Claim 6 in the coating of metal panels, of plastics and of wood and in the coating of leather, textiles, paper and building materials.

9. The use of an acrylate copolymer as claimed in Claim 1 for preparing powder coating materials.

10. The use of a reaction product of an acrylate copolymer as claimed in Claim 1 with a polycarboxylic anhydride as a curing agent for acid-curable synthetic resins.

**Revendications**

1. Copolymères mixtes acryliques **AB** que l'on peut obtenir par polymérisation d'un mélange de monomères **A** dans un solvant organique ou sans solvant, le mélange de monomères **A** renferme des taux en masse

**Aa** de 25 à 80 % de (méth)acrylates d'alkyles, dont les restes alkyles peuvent être linéaires, ramifiés ou cycliques et présenter de 1 à 20 atomes de carbone,

**Ab** de 1 à 28 % de (méth)acrylates d'hydroxyalkyles, dont les restes hydroxyalkyles peuvent être linéaires, ramifiés ou cycliques et présenter de 2 à 20 atomes de carbone,

**Ac** de 0,5 à 20 % d'acides carboxyliques insaturés en $\alpha,\beta$, et

**Ad** de 0 à 55 % de composés vinyliques aromatiques ou d'esters vinyliques aliphatiques et d'éthers vinyliques, d'halogénures vinyliques, de cétones ou d'aldéhydes à insaturation oléfinique, d'esters d'alcools glycidylique ou méthylglycidylique avec des acides carboxyliques à insaturation oléfinique, ou de nitriles avec des acides carboxyliques insaturés en $\alpha,\beta$,

la somme des taux en masse pour les composants **Aa** à **Ad** donne 100 %, en présence d'amorceurs de polymérisation radicalaires et d'au moins un

**B** polyester ou oligomères de polyester que l'on peut obtenir par polycondensation à partir de polyols **Ba** et d'acides polycarboxyliques **Bb,** présentant indice d'hydroxyle de 50 à 350 mg/g, un indice d'acide de 1 à 50 mg/g et une masse molaire moyenne en poids Mw jusqu'à 5000 g/mole,

à condition que les polyesters ou les polyesters oligomères présents dans la polymérisation du mélange **A** ne comprennent pas de doubles liaisons oléfiniques, que le taux en masse du composant **B** dans le produit final **AB** soit inférieur à 10 % de sa masse et que ce produit final présente un indice d'acide de 5 à 45 mg/g, un indice d'hydroxyle de 40 à 125 mg/g, ainsi qu'une masse molaire moyenne en poids Mw d'au maximum 10000 g/mole et une hétérogénéité (U = Mw/Mn) de 3 ou inférieure à 3.

2. Copolymères mixtes acryliques selon la revendication 1, **caractérisés en ce que** les composants **Aa** à **Ad** sont choisis de façon telle que, par polymérisation de ce mélange **A** sans autres additifs, on obtiendrait théoriquement un copolymère acrylique ayant un indice d'acide d'au moins 5 mg/g et un indice d'hydroxyle de 30 à 130 mg/g.

3. Copolymères mixtes acryliques selon la revendication 1, **caractérisés en ce qu'**on peut obtenir le polyester **B** par polycondensation de composés hydroxylés aliphatiques **Ba** et de composés carboxylés aromatiques **Bb** et qui présente une masse molaire moyenne en poids Mw de 500 à 4000 g/mole, un indice d'acide de 1 à 50 mg/g et un indice d'hydroxyle de 50 à 300 mg/g, les produits de départ **Ba** et **Bb** sont exempts de doubles liaisons oléfiniques et possèdent chacun, indépendamment l'un de l'autre, une fonctionnalité moyenne de 1,8 à 2,3.

4. Copolymères mixtes acryliques selon la revendication 1, **caractérisés en ce qu'**on peut obtenir les polyesters **B** par polycondensation de composés dihydroxyliques aliphatiques linéaires ou ramifiés et d'acides dicarboxyliques aromatiques.

5. Procédé pour la préparation de copolymères mixtes acryliques **AB** selon la revendication 1, **caractérisé en ce qu'**on prépare dans la première étape un polyester par polycondensation sans solvant de composés hydroxyliques multifonctionnels aliphatiques linéaires ou ramifiés **Ba** et d'acides carboxyliques multifonctionnels aromatiques **Bb,** dans la deuxième étape, on ajoute à ce polyester un mélange de monomères **A** renfermant des taux en masse

- de 25 à 80 % de (méth)acrylates d'alkyle **Aa**, dont les restes alkyles peuvent être linéaires, ramifiés ou cycliques et présenter de 1 à 20 atomes de carbone,
- de 1 à 28 % de (méth)acrylates d'hydroxyalkyles **Ab,** dont les restes hydroxyalkyles peuvent être linéaires, ramifiés ou cycliques et présenter de 2 à 20 atomes de carbone,
- de 0,5 à 20 % d'acides carboxyliques insaturés en $\alpha,\beta$ **Ac,** et
- de 0 à 55 % du composant **Ad** renfermant un ou plusieurs composés pris dans le groupe comprenant des composés vinyliques aromatiques, des esters vinyliques et éthers vinyliques aliphatiques, des halogénures vinyliques, des cétones ou aldéhydes à insaturation oléfinique, des esters d'alcools glycidylique ou méthylglycidylique avec des acides carboxyliques à insaturation oléfinique, et de nitriles avec des acides carboxyliques insaturés en $\alpha,\beta$,

la somme des taux en masse pour les composants **Aa** à **Ad** dans le mélange de monomères **A** donne 100 %, et dans la troisième étape, on polymérise ce mélange de monomères en présence du polyester **B,** par amorce par des amorceurs radicalaires sans solvant ou dans un solvant organique inerte, le polyester **B** ne comprend pas de doubles liaisons oléfiniques, le taux en masse du polyester **B** dans le copolymère mixte acrylique **AB** est inférieur à 10 % de sa masse, et le copolymère mixte acrylique présente un indice d'acide de 5 à 45 mg/g, un indice d'hydroxyle de 40 à 125 mg/g, une masse molaire moyenne en poids Mw d'au maximum 10000 g/mole et une hétérogénéité U égale à 3 ou inférieure à 3.

6. Agent de revêtement renfermant des copolymères mixtes acryliques selon la revendication 1 et des durcisseurs pris dans le groupe comprenant des résines aminoplastes, des isocyanates multifonctionnels bloqués et non bloqués, des acides carboxyliques multifonctionnels ainsi que des composés présentant des groupes anhydride d'acide, le rapport du nombre de groupes hydroxyle du copolymère mixte acrylique au nombre de groupes réactifs sur les groupes hydroxyle du réticulant est compris entre 0,3:1 et 3:1.

7. Agent de revêtement selon la revendication 6 renfermant en plus d'autres composants liants présentant des groupes hydroxyle pris parmi les polyester-, polyéther-, pocarbonate-, polyuréthanne-ou polyacrylate-polyols, ou des diluants réactifs aminés pris parmi les aldimines, les cétimines, les oxazolidines ainsi que les β-hydroxyamines et les esters substitués de l'acide asparagique.

8. Utilisation d'agents de revêtement selon la revendication 6 dans le laquage de tôles métalliques, de matières plastiques, de bois et dans l'enduction de cuir, de textile, de papier et de matériaux de construction.

9. Utilisation de copolymères mixtes acryliques selon la revendication 1 pour la préparation de vernis en poudre.

10. Utilisation de produits de réaction des copolymères mixtes acryliques selon la revendication 1 avec des anhydrides d'acides polycarboxyliques, en tant que durcisseur pour des résines durcissables par des acides.